(19) Europäisches Patentamt
European Patent Office
Office européen des brevets

(11) **EP 3 395 032 B1**

(12) **EUROPEAN PATENT SPECIFICATION**

(45) Date of publication and mention
of the grant of the patent:
**20.07.2022 Bulletin 2022/29**

(21) Application number: **16719228.5**

(22) Date of filing: **08.04.2016**

(51) International Patent Classification (IPC):
***G06F 21/14*** *(2013.01)*

(52) Cooperative Patent Classification (CPC):
**H04L 63/123; G06F 21/645; H04L 9/3218;**
**H04L 67/1097;** G06F 2221/2101

(86) International application number:
**PCT/EP2016/057699**

(87) International publication number:
**WO 2017/174141 (12.10.2017 Gazette 2017/41)**

(54) **METHOD FOR PROVIDING A PROOF-OF-RETRIEVABILITY**

VERFAHREN ZUR ERMITTLUNG EINES ABRUFBARKEITSBEWEISES

MÉTHODE D'OBTENIR UNE ÉPREUVE DE RÉCUPÉRABILITÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**31.10.2018 Bulletin 2018/44**

(73) Proprietor: **NEC Corporation**
**Minato-ku, Tokyo 108-8001 (JP)**

(72) Inventors:
• **ARMKNECHT, Frederik**
**67549 Worms (DE)**
• **KARAME, Ghassan**
**69115 Heidelberg (DE)**

(74) Representative: **Ullrich & Naumann PartG mbB**
**Schneidmühlstrasse 21**
**69115 Heidelberg (DE)**

(56) References cited:
**WO-A1-2015/173434**

**Description**

The present invention relates to a method for providing a proof-of-retrievability, 'POR', to a client for data stored on a storage entity, performed in a memory of one or more computing devices.

The present invention further relates to a system for providing a proof-of-retrievability, 'POR', to a client for data, comprising a storage entity for storing said data of said client and an auditing entity.

The present invention even further relates to a non-transitory computer readable medium storing a program causing a computer to execute a method for providing a proof-of-retrievability for data stored on a storage entity to a client.

Even further the present invention relates to an auditing entity and even further the present invention relates to a client entity.

Although applicable to any kind of storage entities, the present invention will be described with regard to cloud storage.

Proofs of Retrievability, 'POR', are cryptographic proofs, e.g. shown in the non-patent literature of SHACHAM, H., and WATERS, B. Compact Proofs of Retrievability, in ASIACRYPT (2008), pp. 90-107, enabling a cloud provider to prove that a user can retrieve his file in its entirety. POR can be frequently executed by the user to ensure that their files stored on the cloud can be fully retrieved at any point in time. To conduct and verify POR, users need to be equipped with devices that have network access, and that can tolerate the (non-negligible) computational overhead incurred by the verification process.

In the non-patent literature of Frederik Armknecht, Jens-Matthias Bohli, Ghassan Karame, Zongren Liu, Christian Reuter, Outsourced Proofs of Retrievability In Proceedings of the ACM Conference on Computer and Communications Security (ACM CCS), Arizona, USA, 2014 so-called outsourced Proofs of Retrievabilty are described in which users can task an exernal auditor to perform and verify a POR with a cloud provider.

WO2015/173434 discloses a method for proving retrievability of information by conducting two PORs in parallel with a service provider.

However one of the problems addressed by embodiments of the present invention is that secure publicly verifiable POR schemes cannot be transformed into an OPOR in general or only with major modifications.

Therefore one of the problems addressed by embodiments of the present invention is to provide a secure outsourced/delegable POR scheme being transformed from any secure publicly verifiable POR scheme with only minor modifications, in particular with minimal user interaction

One of the further problems addressed by embodiments of the present invention is that conventionally large-scale adoption of POR by cloud users is hindered, since many users increasingly rely on portable devices that have limited computational capacity, or might not always have network access.

One of the further problems addressed by embodiments of the present invention is to enhance trust in cloud storage.

In an embodiment, the present invention provides a method for providing a proof-of-retrievability according to claim 1.

In an embodiment, the present invention provides a system for providing a proof-of-retrievability according to claim 9.

In an embodiment, the present invention provides a non-transitory computer readable medium according to claim 10.

In an embodiment, the present invention provides an auditing entity according to claim 11.

In an embodiment, the present invention provides a client according to claim 12.

In an embodiment, the present invention provides a method for providing a secure outsourced/ delegable proof-of-retrievability scheme according to claim 13.

At least one embodiment may have at least one of the following advantages:

- Receiving higher guarantees on permanent data availability compared to today's service level agreements SLA of data storage providers.
- Outsourcing the verification of public POR to an independent auditor, so that no activity of the data owner is necessary.
- The possibility to retrieve and check the log file of the auditor at any time, to validate the work of the auditor in a single batch verification
- High flexibility and applicability, for example for establishing a cyber security insurance market.

The terms "computing device", "computing entity" or "storage entity", "client", "client entity", "auditing entity", or similar terms refer in particular in the claims, preferably in the specification each to a device or entity adapted to perform computing like a personal computer, a tablet, a mobile phone, a server, a router, a switch or the like and comprises one or more processors having one or more cores and may be connectable to a memory for storing an application which is adapted to perform corresponding steps of one or more of the embodiments of the present invention.

Any application may be software based and/or hardware based installed in the memory on which the processor(s) can work on. The computing devices or computing entities may be adapted in such a way that the corresponding steps to be computed are performed in an optimized way. For instance different steps may be performed in parallel with a single processor on different of its cores. Further the computing devices or computing entities may be identical forming a single computing device.

The term "computer readable medium" may refer to any kind of medium, which can be used together with a computation device or computer and on which information can be stored. Said information may be any kind of data which can be read into a memory of a computer. For example said information may include program code for executing with said computer. Examples of a computer readable medium are tapes, CD-ROMs, DVD-ROMs, DVD-RAMs, DVD-RWs, BluRay, DAT, MiniDisk, solid state disks SSD, floppy disks, SD-cards, CF-cards, memory-sticks, USB-sticks, EPROM. EEPROM or the like.

The term "storage entity" refers in particular in the claims, preferably in the specification to a computing entity or computing device adapted to store data or information.

The term "data identification information" refers in particular in the claims, preferably in the specification to any kind of information or data which can be used to identity other data or information or parts of data or information stored. For example data identification information is the key and the information to be stored is the value to said key in a key value store.

The term "logging information" refers in particular in the claims, preferably in the specification to any kind of data or information which includes results or information of prior or current checks of data or the like.

The term "single batch verification procedure" refers in particular in the claims, preferably in the specification to a procedure, algorithm and/or method enabling a verification of a plurality of different information or data in one step or round, which means that for example a plurality of entries of data can be checked within a single round of verification without having the need to check each entry of data individually by performing the procedure, algorithm and/or method more than once.

The term "BLS" refers in particular in the claims, preferably in the description to the Boneh-Lynn-Shacham signature scheme.

Further features, advantages and further embodiments are described or may become apparent in the following: Said committing according to step c) may be performed by using a Merkle tree or using a cryptographic hash function. This allows in an easy and reliable way to ensure data integrity.

Said public source of randomness may be time-dependent. This provides randomness in an easy and reliable way.

Said public source of randomness may be based on Bitcoin block chain. This enables since any Bitcoin block hashes can be publically reconstructed in any point in the past and new values are unpredictable randomness to a high extent.

The same batch verification procedure may be used by the auditing entity for verifying retrievability of said data and by the client for verifying the logging information of the auditing entity such that the client uses said batch verification procedure with accumulated proofs of said auditing entity. This enables an efficient implementation of said batch verification procedure.

Said data identification information may be computed in form of file tags, said file tags comprising one or more random elements as well as a random file name, the number of random elements corresponding to a partition of the data to be stored. Said random file name may be chosen from sufficiently large domain. The file tag enables to identify the file and the file then may be published to anyone which is interested in verification.

Said file tag may be a concatenation of said one or more random elements and said random file name. This allows in an easy way to provide said file tag, comprising of said random elements and said random file name.

Said cryptographic hash function may be a BLS hash function. This allows computation of the hash function and the corresponding signature efficiently allowing shorter signatures compared with full domain hash FDH.

A pseudo-random function and/or pseudo-random permutation function may be used during said proof-of-retrievability to generate randomized coefficients and indices for parts of said encoded data to be proved to be retrievable. This allows efficiently generating challenges for said POR.

There are several ways how to design and further develop the teaching of the present invention in an advantageous way. To this end it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawings

Fig. 1     shows steps of a method according to an embodiment of the present invention;

Fig. 2     shows steps of a method according to a further embodiment of the present invention; and

Fig. 3     shows steps of method according to a further embodiment of the present invention.

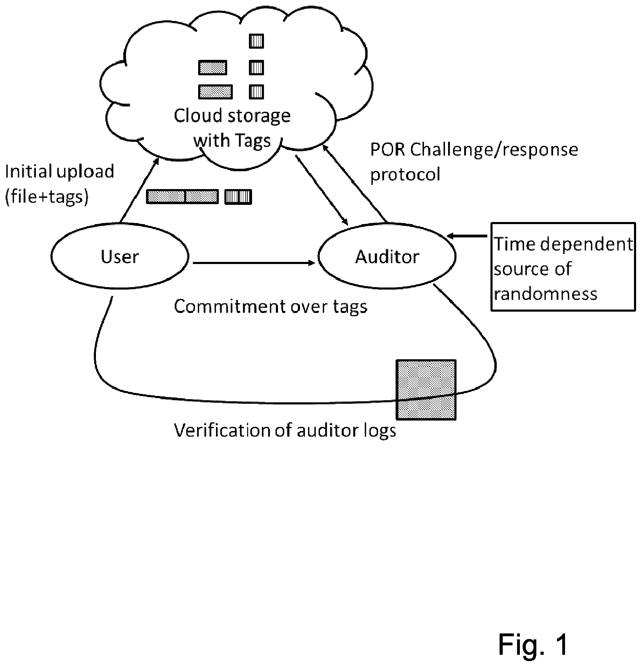

Fig. 1 shows steps of a method according to an embodiment of the present invention.

In Fig. 1 a sketch of the method according to an embodiment of the present invention is shown.

Similar to a conventional POR scenario, the following scenario is assumed: A user U, the data owner, plans to outsource his data M to a service provider S. In addition, the user U is interested in acquiring regular proofs that his data M is correctly stored and retrievable from said service provider S. Further a new entity A, called the auditor, who runs POR with said service provider S on behalf of the user U is present. If these POR do not succeed, the auditor A takes certain actions, e.g., informs the user immediately. Otherwise, the user U is assured that the data M are stored correctly.

To summarize Fig. 1 the user U first encodes the information to be stored and exchanges credentials with the auditor A and the cloud service provider S and vice versa. The user U commits to the encoded information to be stored using tags to the auditor. The file M and the tags are uploaded by the user U to the cloud storage S. The auditor A which uses a public source of unpredictable randomness to sample randomness of the public proof-of-retrievability performs a proof-of-retrievability challenge/response protocol with the cloud storage provider S and computes a corresponding log file for the user U. The auditor A also verifies the correctness of the stored data M bases on the result of the POR challenge/response protocol. The user U in turn then retrieves the log file and validates the verification of the auditor log file in a single batch verification procedure.

In detail an external, time-dependent randomness source is used:

Formally, this source may be represented by a function GetRandomness(t) which takes as input a point in time t and outputs either a bitstring $y \in \{0,1\}^n$ for some fixed positive integer $n \geq 1$ or $\bot$. More precisely, it first checks if t refers to a point in time in the past, i.e., refers to a date before the current point in time curr assuming that the user and GetRandomness() are synchronized. If this is not the case, the output is $\bot$. Otherwise, the output is a bitstring $x \in \{0,1\}^n$. Here, two properties need to hold:

- The values GetRandomness(t) for past values t, i.e., $t \leq$ curr, can be publicly requested anytime. That is, these values can be correctly reconstructed by any party.

- The values GetRandomness(t) for past values t, i.e., $t >$ curr, cannot be predicted.

An embodiment may be based on Bitcoin and works as follows:

$$\text{GetRandomness(t)} = \begin{cases} \bot \text{ if } t > curr \\ h_t \text{ if } t \leq curr \end{cases}$$

Here, $h_t$ is the hash of the latest block that has appeared until time t in the Bitcoin block chain. As it is possible to publicly reconstruct any Bitcoin block hashes in any point in the past, the first property is met. Since a new block is on average generated every 10 minutes and is unpredictable, the second property is fulfilled as well.

In an embodiment the following procedures are used:

First a Setup procedure is performed, which generates randomly an RSA public key pk = (N, e) and an RSA secret key sk = d. This public key pk is distributed to all parties, including the auditor A. Then a family of pseudo-random functions fk: $\mathbb{N} \rightarrow \mathbb{Z}_N$ , i.e., a set of functions indexed by a key is constructed, and a cryptographic hash function $H : \{0, 1\}^* \rightarrow \mathbb{Z}_N$ and these are made public.

The procedure Store (pk,sk,M) takes as input the public key pk, the secret key sk and the file M to be stored. The file M is split prior to storing into n blocks $m_1, ..., m_n$ given some n, depending on the chosen block size. Each block $m_i$ is then again split into s sectors $\{m_{ij}\}$ for $1 \leq i \leq n$ and $1 \leq j \leq s$ such that each sector is an element of $\mathbb{Z}_N$ . A random file name "name" is chosen from a sufficiently big domain, e. g. $\mathbb{Z}_N$ as well as s random elements $u_1, ..., u_s \in \mathbb{Z}_N^*$ . The file tag $\tau$ is then $\{name, n, u_1, ... , u_s\}$ and will, like the public key, be made public to anyone interested in verification. Let $pk = (N,e), sk = d.$ For each i with $1 \leq i \leq n$, then

$$\sigma_i \leftarrow (H(name||i) \cdot \prod_{j=1}^s u_j^{m_{ij}})^d \bmod N$$

is computed.

Finally, a pseudo-random permutation : {1, ... , n} → {1, ... ,n} is set up.

The processed file M* is {$m_{ij}$}, $1 \leq i \leq$ n and $1 \leq j \leq s$ together with {$\sigma_1, ... , \sigma_n$}. The other values and functions are stored locally by the user.

The processed file M* is then uploaded to the storage entity for storing.

For proving the retrievability of M on the storage entity, the auditor A performs the following proof procedure: Proof (pk, M*, $\tau$, Q) This procedure comprises the following steps:

1. in a first step let pk = (N, e) and Q = (c, t) where c is the challenge size and t denotes a point in time agreed upon with the challenger. Initialize I = Ø. GetRandomness(t) is invoked and two keys $k_1$ and $k_2$ from the output are extracted.

For $1 \leq j \leq c,$

• an index of a block to sample: $i = \pi_{k_1}(j)$, and
• a coefficient $a_i = f_{k_2}(j)$ is computed.

(i, $a_i$) is then added to the set I containing all the indices and coefficients that depend on t.

2. In a second step using the set I from step 1. and the values $\sigma_i$ contained in M* are used.

$$\sigma \leftarrow \prod_{(i,a_i)\in I} \sigma_i^{a_i} \ mod \ N$$

3. In a third step the set I from step 1. and the file sectors from M* are used and for each $1 \leq j \leq s$

$$\mu_j \leftarrow \sum_{(i,a_i)\in I} a_i m_{ij} \in \mathbb{Z}$$

is computed.

Then in a forth step 4.

$$\mathcal{V} = \left(\sigma, \mu_1, ... , \mu_s\right)$$

is output.

To verify the result of the proof the auditor A performs the following verification procedure: verify (pk, $V$, $\pi$, Q)

This procedure comprises of the following steps:

1. In a first step $pk = (N,e), V = (\sigma, \mu_1, ... , \mu_s)$, $\tau = \{name, u_1, ... , u_s\}, Q = (c,t), I = Ø$ are set.
2. In a second step $k_1$ and $k_2$ by means of GetRandomness(t) as explained above are acquired. For $1 \leq j \leq c,$

• an index of a block to sample: $i = \pi_{k_1}(j)$, and
• a coefficient $a_i = f_{k_2}(j)$ is computed.

(i, $a_i$) is added to the set I containing all the indices and coefficients that depend on t.

3. In a third step a log entry $\Lambda := (t, \sigma, \mu_1, ... , \mu_s)$ is added.
4. In a forth step it is checked whether

$$\sigma^e \overset{?}{=} \prod_{(i,a_i)\in I} H(name)||i)^{a_i} \cdot \prod_{j=1}^{s} u_j^{\mu_j} \ mod$$

If so, TRUE is output, as the verification succeeded, otherwise FALSE is output.

To check the verified log-file of the auditor A, the user U then performs the following procedure checkLog (pk,T): Let pk = (N, e), $\tau = \{name, u_1, ..., u_s\}$. To address different log entries within the log file, these are expressed by (t, $\sigma^{(t)}$,

$\mu_1^{(t)}$ , ..., $\mu_s^{(t)}$ ). The user U selects dates $T = \{t_1, t_2, ..., t_l\}$ for which log entries have been created according to the review level agreement and SLA sends them to auditor A. The auditor A then responds with an accumulated response:

$$\mathcal{V}^{(T)} = \left( \sigma^{(T)}, \mu_1^{(T)}, ..., \mu_s^{(T)} \right)$$

where

$$\sigma^{(T)} = \prod_{t \in T} \sigma^{(t)} \; mod \; N$$

and, for $1 \le j \le s,$

$$\mu_j^{(T)} = \sum_{t \in T} \mu_j^{(t)} \in \mathbb{Z}$$

The user U will then execute the above procedure verify with the n accumulated proofs and arrive at step 4 of said procedure with the following values:

$$(\sigma^{(T)})^e \stackrel{?}{=} \prod_{(i,a_i) \in I_{(T)}} H(name||i)^{a_i} \cdot \prod_{j=1}^{s} u_j^{\mu_j^{(T)}} \; mod$$

Here, $I_{(T)}$ is defined as follows: Let for any $t \in T$ denote by $I_t$ the set of pairs (i, $a_i$) that are derived from GetRandomness(t) as explained above. Then, $I_{(T)} = \bigcup_{t \in T} I_t$ is set.

In a further embodiment the SW BLS signature scheme instead of the prior SW-RSA scheme is used.

The following assumptions are made let e: $G_1 \times G_2 \to G_T$ be a bilinear map and let g be a generator of $G_2$, and H : $\{0,1\}^* \to G_1$ be the BLS hash.

First again a setup procedure is performed: A random $\alpha \in \mathbb{Z}_p$ is chosen and $v \leftarrow g^\alpha$ is computed. As public key pk = v is set and as secret key sk = $\alpha$. pk is distributed to all parties, including the auditor A.

For storing the user U performs the procedure Store(pk, sk, M): Let pk = v and sk = $\alpha$. The file M is split into n blocks $m_1, ..., m_n$ (given some n, depending on the chosen block size). Each block is then again split into s sectors $\{m_{ij}\}$ for $1 \le i \le n$ and $1 \le j \le s$. A random file name "name" is chosen from a sufficiently large domain (e. g. $\mathbb{Z}_p$ ) as well as s random elements $u_1, ..., u_s \in G_1$. The file tag $\tau$ is then $\{name||n||u_1||...||u_s\}$ and will, like the public key, be published to anyone interested in verification.

For each $i$, $1 \le i \le n$,

$$\sigma_i \leftarrow (H(name||i) \cdot \prod_{j=1}^{s} u_j^{m_{ij}})^\alpha$$

is computed.

The processed file M* is $\{m_{ij}\}$, $1 \le i \le n$ and $1 \le j \le s$ together with $\{\sigma_i\}$, $1 \le i \le n$. Additionally, let f : $\{1, ... , n\} \to \mathbb{Z}_p$ be a pseudo-random function and $\pi : \{1, ... , n\} \to \{1, ... , n\}$ a pseudo-random permutation. f and $\pi$ will be used to generate randomized coefficients and indices and take a key as additional input.

The auditor A then may prove the retrievability by performing proof (pk, M*, $\tau$, Q): This procedure comprises of the following steps:

1. Let pk = v, Q = (c, t), and $I$. Derive $k_1$ and $k_2$ from GetRandomness(t) as explained above, where t is a time agreed upon with the challenger. For $1 \le j \le c,$

- an index of a block to sample: $i = \pi_{k_1}(j)$ and
- a coefficient $a_i = f_{k_2}(j) \in \mathbb{Z}_p$ are computed

$(i, a_j)$ is added to the set I comprising all the indices and coefficients that depend on t.

2. Then the set I from step 1. is used and the values $\sigma_i$ stored in M*. Then

$$\sigma \leftarrow \prod_{(i, a_i) \in I} \sigma_i^{a_i} \in G_1$$

is computed.

3. In a third step the set I from step 1 is used and the file sectors from M*. Then for each $1 \le j \le s$

$$\mu_j \leftarrow \sum_{(i, a_i) \in I} a_i \cdot m_{ij} \in \mathbb{Z}_p$$

is computed.

4. In a fourth step

$$\mathcal{V} = (\sigma, \mu_1, ..., \mu_s)$$

is output.

To verify the result of the proof the auditor performs the following verification procedure: verify(pk, $V$, $\tau$, $Q$): This procedure comprises of the following steps:

1. Let $pk = (v)$, $V = (\sigma, \mu_1, ..., \mu_s))$, $\tau = \{name, u_1, ..., u_s\}$, $Q = (c, t)$, $I = \varnothing$.

4. In a second step $k_1$ and $k_2$ are derived from GetRandomness(t) as explained above. For $1 \le j \le c$,

- an index of a block to sample: $i = \pi_{k_1}(j) \in \{1, ..., n\}$
- a coefficient $a_i = f_{k_2}(j) \in \mathbb{Z}_p$ are computed.

$(i, )$ is added to the set $I$ containing all the indices and coefficients that depend on t.

3. In a third step a log entry $\Lambda := (t, \sigma, \mu_1, ..., \mu_s)$ is added to the log file.

4. In a fourth step it is checked whether

$$e(\sigma, g) \overset{?}{=} e\left(\prod_{(i, a_i) \in I} H(name||i)^{a_i} \cdot \prod_{j=1}^{s} u_j^{\mu_j}, v\right)$$

If so, TRUE is output, as the verification succeeded, otherwise FALSE is output.

To check the verified log-file of the auditor A, the user U then performs the following procedure checkLog(*pk*, $\tau$): Let pk = *(N, e)*, $\tau = \{name, u_1, ..., u_s\}$. To address different log entries within the log file, these are expressed by *(t,* $\sigma^{(t)}, \mu_1^{(t)}, ..., \mu_s^{(t)}$ ).

The user U selects some set T of indices where log entries should have been created according to the SLA and sends them to the auditor A. He responds with an accumulated response:

$$\mathcal{V}^{(T)} = \left(\sigma^{(T)}, \mu_1^{(T)}, ..., \mu_s^{(T)}\right)$$

where

$$\sigma^{(T)} = \prod_{t \in T} \sigma^{(t)} \in G_1$$

and, for $1 \leq j \leq s$

$$\mu_j^{(T)} = \sum_{t \in T} \mu_j^{(t)} \in \mathbb{Z}_p$$

The user U will then execute the verify procedure with the $n$ accumulated proofs and arrive at step 4 in said procedure with the following values:

$$e\left(\sigma^{(T)}, g\right) \stackrel{?}{=} e\left(\prod_{(i,a_i) \in I_{(T)}} H(name||i)^{a_i} \cdot \prod_{j=1}^{s} u_j^{\mu_j^{(T)}}, v\right)$$

where $I_{(t)}$ is defined as explained for the outsourced public SW-RSA which holds if all single proofs would pass the verify procedure individually.

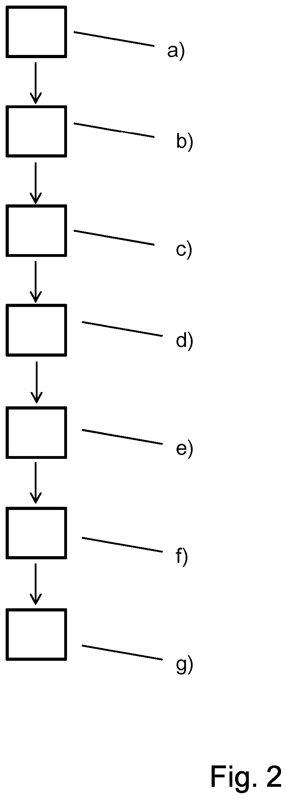

Fig. 2 shows steps of a method according to a further embodiment of the present invention.

Fig. 2 shows steps of a method for providing a proof-of-retrievability to a client, for data stored on a storage entity, performed in a memory of one or more computing devices, comprising the steps of

a) Encoding, by said client, data to be stored on said storage entity,
b) Exchanging credentials between said storage entity, said client and an auditing entity,
c) Committing, by said client, to the encoded information using data identification information,
d) Storing said encoded data on said storage entity together with said data identification information,
e) Computing, by said auditing entity, logging information for said stored data by performing one or more proofs-of-retrievability, 'POR', between said auditing entity and said storage entity, wherein for sampling randomness for said POR a public source of unpredictable randomness is used,
f) Verifying, by said auditing entity, said computed logging information, and
g) Verifying, by said client, said verified logging information of said auditing entity in a single batch verification procedure.

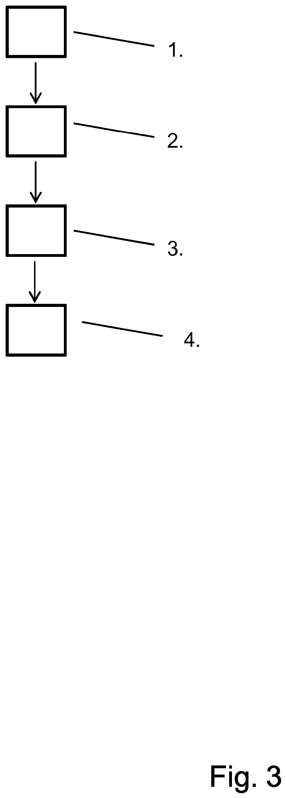

Fig. 3 shows steps of method according to a further embodiment of the present invention.

Fig. 3 shows a method for outsourcing a proof of retrievability comprising the steps of

1) Encoding the information to be stored and exchanging credentials between the data owner, the storage provider and the external auditor.
2) The user commits to the encoding information by means of a Merkle tree or using cryptographic hashes
3) The auditor verifies the correctness of the stored information by producing a log file for the data owner and using a public source of unpredictable randomness to sample randomness of the public POR.
4) The data owner retrieves the log file and validates in a single batch verification the verification done by the auditor.

In summary the present invention provides or enables a transformation of any secure publicly verifiable POR scheme into a secure outsourced/delegable POR scheme using external sources of randomness and cryptographic batch verification procedures. The present invention enables to rely on a public source of unpredictable randomness for example Bitcoin in order to prevent a verifier from misbehaving when performing a public proof of retrievability and enables an efficient batching of the verification of logs created by a verifier in order to audit the auditor.

At least one embodiment of the present invention increases the users trust into storage providers by incurring minimal user interaction. The present invention further provides enhanced flexibility and applicability, for example enables customers and external auditors to establish a contract by which customers can be assured about the security to their files.

**Claims**

**1.** A method for providing a proof-of-retrievability, 'POR', to a client, for data stored on a storage entity, performed in a memory of one or more computing devices, comprising the steps of

a) Encoding, by said client, data to be stored on said storage entity, said encoded data comprising at least one partition,

b) Exchanging credentials between said storage entity, said client and an auditing entity,

c) Computing, by said client, a commitment, said commitment being based on at least one random element, an index of said at least one partition and said at least one partition of said encoded data,

d) Storing said encoded data on said storage entity together with said commitment,

e) Computing, by said auditing entity, logging information for said stored data by performing a public POR between said auditing entity and said storage entity, said public POR comprising a random sampling of at least one partition of the stored data, wherein for sampling randomness for said POR a public source of unpredictable randomness is used, and wherein said logging information being computed based on the stored commitment and on said at least one partition of said stored data,

f) Verifying, by said auditing entity, said computed logging information by checking whether a commitment based on said computed logging information corresponds to a subset of the stored commitment and

g) Validating, by said client, said verified logging information of said auditing entity by performing the same verification according to step f) based on the verified logging information

2. The method according to claim 1, wherein said commitment according to step c) being computed using a Merkle tree or using a cryptographic hash function.

3. The method according to one of the claims 1-2, wherein said public source of randomness is time-dependent.

4. The method according to one of the claims 1-3, wherein said public source of randomness is based on Bitcoin block chain.

5. The method according to one of the claims 1-4, wherein data identification information is computed in form of file tags, said file tags comprising one or more random elements as well as a random file name, the number of random elements corresponding to a partition of the data to be stored.

6. The method according to claim 5, wherein said file tag is a concatenation of said one or more random elements and said random file name.

7. The method according to claim 2, wherein said cryptographic hash function is a BLS hash function.

8. The method according to one of the claims 1-7, wherein a pseudo-random function and/or a pseudo-random permutation function is used during said proof-of retrievablility to generate randomized coefficients and indices for partitions of said encoded data to be proved to be retrievable.

9. A system for providing a proof-of-retrievability, 'POR', for data to a client, comprising a storage entity for storing said data of said client, and

an auditing entity,
said client being adapted

to encode data to be stored on said storage entity, said encoded data comprising at least one partition,
to exchange credentials with said storage entity and said auditing entity,
to compute a commitment, said commitment being based on at least one random element, an index of said at least one partition and said at least one partition of said encoded data,
to initialize storing said encoded data on said storage entity together with said commitment and
to validate verified logging information by performing the same verification of the auditing entity based on the verified logging information,

said storage entity being adapted

to exchange credentials with said client and said auditing entity,
to store said encoded data together with said commitment,
to perform a public POR with said auditing entity,

said auditing entity being adapted

to exchange credentials with said storage entity and said client,
to compute logging information for said stored data by performing a public POR with said storage entity, said public POR comprising a random sampling of at least one partition of the stored data, wherein for sampling randomness for said POR a public source of unpredictable randomness is used and wherein said logging information being computed based on the stored commitment and on said at least one partition of said stored data,
to verify said computed logging information by checking whether a commitment based on said computed logging information corresponds to a subset of the stored commitment.

10. A non-transitory computer readable medium storing a program causing a computer to execute a method for providing a proof-of-retrievability, 'POR', to a client, for data stored on a storage entity, comprising the steps of

a) Encoding, by said client, data to be stored on said storage entity, said encoded data comprising at least one partition
b) Exchanging credentials between said storage entity, said client and an auditing entity,
c) Computing, by said client, a commitment, said commitment being based on at least one random element, an index of said at least one partition and said at least one partition of said encoded data,
d) Storing said encoded data on said storage entity together with said commitment,
e) Computing, by said auditing entity, logging information for said stored data by performing a public POR between said auditing entity and said storage entity, said public POR comprising a random sampling of at least one partition of the stored data, wherein for sampling randomness for said POR a public source of unpredictable randomness is used, and wherein said logging information being computed based on the stored commitment and on said at least one partition of said stored data,
f) Verifying, by said auditing entity, said computed logging information by checking whether a commitment based on said computed logging information corresponds to a subset of the stored commitment and
g) Validating, by said client, said verified logging information of said auditing entity by performing the same verification according to step f) based on the verified logging information

11. An auditing entity for use with a method according to one of the claims 1-8 and/or in a system of claim 9, said auditing entity being adapted to compute logging information for stored data on a storage entity by performing a public proof-of-retrievability, 'POR', with said storage entity, wherein for sampling randomness for said POR a public source of unpredictable randomness is used, and to verify said computed logging information by checking whether a commitment based on said computed logging information corresponds to the stored commitment.

12. A client entity for use with a method according to one of the claims 1-8 and/or in a system of claim 9, said client entity being adapted to encode data to be stored on a storage entity, to compute a commitment, said commitment being based on at least one random element, an index of said at least one partition and said at least one partition of said encoded data,, to initialize storing said encoded data on said storage entity together with said commitment and to to validate verified logging information by performing the same verification according to step f) based on the verified logging information.

13. A method for providing a secure outsourced/delegable proof-of-retrievability, 'OPOR', scheme being transformed from any secure publicly verifiable POR scheme and using for sampling randomness for said OPOR a public source of unpredictable randomness and cryptographic batch verification procedures to verify POR and to verify verified POR information using a method according to one of the claims 1-8.

**Patentansprüche**

1. Ein Verfahren zum Bereitstellen eines Rückholbarkeitsnachweises (POR), an ein Endgerät für Daten, die auf einer Speichereinheit gespeichert sind, das in einem Speicher einer oder mehrerer Rechenvorrichtungen ausgeführt wird und die folgenden Schritte umfasst

a) Kodieren von Daten, die auf der Speichereinheit gespeichert werden sollen, durch das Endgerät, wobei die kodierten Daten mindestens eine Partition umfassen,
b) Austauschen von Berechtigungsnachweisen zwischen der Speichereinheit, dem Endgerät und einer Prüfeinheit,

c) Berechnen eines Bekenntnisses durch das Endgerät, wobei das Bekenntnis auf mindestens einem Zufallselement, einem Index der mindestens einen Partition und der mindestens einen Partition der kodierten Daten basiert,

d) Speichern der kodierten Daten auf der Speichereinheit zusammen mit dem Bekenntnis,

e) Berechnen von Protokollierungsinformationen für die gespeicherten Daten durch die Prüfeinheit, indem ein öffentliches POR zwischen der Prüfeinheit und der Speichereinheit durchgeführt wird, wobei das öffentliche POR eine Zufallsstichprobe von mindestens einer Partition der gespeicherten Daten umfasst, wobei für die Zufallsstichprobe für das POR eine öffentliche Quelle unvorhersehbarer Zufälligkeit verwendet wird, und wobei die Protokollierungsinformationen auf der Grundlage des gespeicherten Bekenntnisses und der mindestens einen Partition der gespeicherten Daten berechnet werden,

f) Verifizieren der berechneten Protokollierungsinformationen durch die Prüfeinheit, indem geprüft wird, ob ein auf den berechneten Protokollierungsinformationen basierendes Bekenntnis einer Teilmenge des gespeicherten Bekenntnisses entspricht, und

g) Validieren der verifizierten Protokollierungsinformationen der Prüfungseinheit durch das Endgerät, indem die gleiche Verifizierung gemäß Schritt f) auf der Grundlage der verifizierten Protokollierungsinformationen durchgeführt wird.

2. Verfahren nach Anspruch 1, wobei das Bekenntnis gemäß Schritt c) unter Verwendung eines Merkle-Baums oder einer kryptographischen Hash-Funktion berechnet wird.

3. Verfahren nach einem der Ansprüche 1-2, wobei die öffentliche Zufallsquelle zeitabhängig ist.

4. Verfahren nach einem der Ansprüche 1-3, wobei die öffentliche Zufallsquelle auf der Bitcoin-Blockkette basiert.

5. Verfahren nach einem der Ansprüche 1-4, wobei Datenidentifikationsinformationen in Form von Datei-Kennzeichen berechnet werden, wobei die Datei-Kennzeichen ein oder mehrere Zufallselemente sowie einen zufälligen Dateinamen umfassen, wobei die Anzahl der Zufallselemente einer Partition der zu speichernden Daten entspricht.

6. Verfahren nach Anspruch 5, wobei das Datei-Kennzeichen eine Verkettung des einen oder der mehreren Zufallselemente und des zufälligen Dateinamens ist.

7. Verfahren nach Anspruch 2, wobei die kryptographische Hash-Funktion eine BLS-Hash-Funktion ist.

8. Verfahren nach einem der Ansprüche 1 bis 7, wobei eine Pseudo-Zufallsfunktion und/oder eine Pseudo-Zufalls-Permutationsfunktion während des Nachweises der Rückholbarkeit verwendet wird, um zufällige Koeffizienten und Indizes für Partitionen der codierten Daten zu erzeugen, deren Rückholbarkeit nachgewiesen werden soll.

9. System zum Bereitstellen eines Rückholbarkeitsnachweises, "POR", für Daten an ein Endgerät

mit einer Speichereinheit zum Speichern der Daten des Endgeräts, und
eine Prüfeinheit,
wobei das Endgerät ausgebildet ist

Daten zu kodieren, die auf der Speichereinheit gespeichert werden sollen, wobei die kodierten Daten mindestens eine Partition umfassen,
Berechtigungsnachweise mit der Speichereinheit und der Prüfeinheit auszutauschen,
ein Bekenntnis zu berechnen, wobei das Bekenntnis auf mindestens einem Zufallselement, einem Index der mindestens einen Partition und der mindestens einen Partition der kodierten Daten basiert,
das Speichern der kodierten Daten auf der Speichereinheit zusammen mit dem Bekenntnis zu initialisieren und
die verifizierten Protokollierungsinformationen zu validieren, indem dieselbe Verifizierung der Prüfeinheit auf der Grundlage der verifizierten Protokollierungsinformationen durchgeführt wird,

wobei die Speichereinheit ausgebildet ist

Berechtigungsnachweise mit dem Endgerät und der Prüfeinheit auszutauschen, die kodierten Daten zusammen mit dem Bekenntnis zu speichern,

ein öffentliches POR mit der Prüfeinheit durchzuführen,

wobei die Prüfeinheit ausgebildet ist

Berechtigungsnachweise mit der Speichereinheit und dem Endgerät auszutauschen, Protokollierungsinformationen für die gespeicherten Daten zu berechnen, indem ein öffentliches POR mit der Speichereinheit durchgeführt wird, wobei das öffentliche POR eine Zufallsstichprobe von mindestens einer Partition der gespeicherten Daten umfasst, wobei für die Zufallsstichprobe für das POR eine öffentliche Quelle von unvorhersehbarer Zufälligkeit verwendet wird und wobei die Protokollierungsinformationen auf der Grundlage des gespeicherten Bekenntnisses und der mindestens einen Partition der gespeicherten Daten berechnet werden,
die berechneten Protokollierungsinformationen zu verifizieren, indem geprüft wird, ob ein auf der berechneten Protokollierungsinformation basierendes Bekenntnis einer Teilmenge des gespeicherten Bekenntnisses entspricht.

10. Nicht-flüchtiges computerlesbares Medium, das ein Programm speichert, das einen Computer veranlasst, ein Verfahren zum Bereitstellen eines Rückholbarkeitsnachweises (proof-of-retrievability, "POR") für Daten an einem Endgerät auszuführen, die auf einer Speichereinheit gespeichert sind, das die folgenden Schritte umfasst

a) Kodieren von Daten, die auf der Speichereinheit gespeichert werden sollen, durch das Endgerät, wobei die kodierten Daten mindestens eine Partition umfassen
b) Austauschen von Berechtigungsnachweisen zwischen der Speichereinheit, dem Endgerät und einer Prüfeinheit,
c) Berechnen eines Bekenntnisses durch das Endgerät, wobei das Bekenntnis auf mindestens einem Zufallselement, einem Index der mindestens einen Partition und der mindestens einen Partition der kodierten Daten basiert,
d) Speichern der kodierten Daten auf der Speichereinheit zusammen mit dem Bekenntnis,
e) Berechnen von Protokollierungsinformationen für die gespeicherten Daten durch die Prüfeinheit, indem ein öffentliches POR zwischen der Prüfeinheit und der Speichereinheit durchgeführt wird, wobei das öffentliche POR eine Zufallsstichprobe von mindestens einer Partition der gespeicherten Daten umfasst, wobei für die Zufallsstichprobe für das POR eine öffentliche Quelle unvorhersehbarer Zufälligkeit verwendet wird, und wobei die Protokollierungsinformationen auf der Grundlage des gespeicherten Bekenntnisses und der mindestens einen Partition der gespeicherten Daten berechnet werden,
f) Verifizieren der berechneten Protokollierungsinformationen durch die Prüfeinheit, indem geprüft wird, ob ein auf den berechneten Protokollierungsinformationen basierendes Bekenntnis einer Teilmenge des gespeicherten Bekenntnisses entspricht, und
g) Validieren der verifizierten Protokollierungsinformationen der Prüfungseinheit durch das Endgerät, indem die gleiche Verifizierung gemäß Schritt f) auf der Grundlage der verifizierten Protokollierungsinformationen durchgeführt wird.

11. Prüfeinheit zur Verwendung mit einem Verfahren nach einem der Ansprüche 1 bis 8 und/oder in einem System nach Anspruch 9, wobei die Prüfeinheit ausgebildet ist, Protokollierungsinformationen für gespeicherte Daten auf einer Speichereinheit zu berechnen, indem sie einen öffentlichen Rückholbarkeitsnachweis ("POR") mit der Speichereinheit durchführt, wobei für eine Zufallsstichprobe für den POR eine öffentliche Quelle unvorhersehbarer Zufälligkeit verwendet wird, und die berechneten Protokollierungsinformationen zu verifizieren, indem sie prüft, ob ein auf den berechneten Protokollierungsinformationen basierendes Bekenntnis dem gespeicherten Bekenntnis entspricht.

12. Endgerät-Einheit zur Verwendung mit einem Verfahren nach einem der Ansprüche 1-8 und/oder in einem System nach Anspruch 9, wobei die Endgerät-Einheit ausgebildet ist, auf einer Speichereinheit zu speichernde Daten zu kodieren, ein Bekenntnis zu berechnen, wobei das Bekenntnis auf mindestens einem Zufallselement, einem Index der mindestens einen Partition und der mindestens einen Partition der kodierten Daten basiert, die Speicherung der kodierten Daten auf der Speichereinheit zusammen mit dem Bekenntnis zu initialisieren und verifizierte Protokollierungsinformationen zu validieren, indem dieselbe Verifizierung gemäß Schritt f) auf der Grundlage der verifizierten Protokollierungsinformationen durchgeführt wird.

13. Verfahren zum Bereitstellen eines sicheren ausgelagerten/delegierbaren Rückholbarkeitsnachweis ("OPOR") Schemas, das aus einem beliebigen sicheren, öffentlich verifizierbaren POR-Schema transformiert wird und für eine Zufallsstichprobe für den OPOR eine öffentliche Quelle unvorhersehbarer Zufälligkeit und kryptographische Stapelverifizierungsverfahren verwendet, um den POR zu verifizieren und verifizierte POR-Informationen unter Verwendung eines Verfahrens nach einem der Ansprüche 1-8 zu verifizieren.

## Revendications

1. Procédé pour la fourniture d'une preuve de capacité de récupération, « POR », à un client, pour des données stockées sur une entité de stockage, réalisé dans une mémoire d'un ou de plusieurs dispositifs informatiques, comprenant les étapes suivantes

   a) le codage, par ledit client, de données devant être stockées sur ladite entité de stockage, lesdites données codées comprenant au moins une partition,
   b) l'échange d'accréditations entre ladite entité de stockage, ledit client et une entité d'audit,
   c) le calcul, par ledit client, d'un engagement, ledit engagement étant basé sur au moins un élément aléatoire, un indice de ladite au moins une partition et ladite au moins une partition desdites données codées,
   d) le stockage desdites données codées sur ladite entité de stockage conjointement avec ledit engagement,
   e) le calcul, par ladite entité d'audit, d'une information de consignation pour lesdites données stockées par la réalisation d'une POR publique entre ladite entité d'audit et ladite entité de stockage, ladite POR publique comprenant un échantillonnage aléatoire d'au moins une partition des données stockées, dans lequel, pour le caractère aléatoire d'échantillonnage pour ladite POR, une source publique de caractère aléatoire imprévisible est utilisée, et dans lequel ladite information de consignation étant calculée sur la base de l'engagement stocké et de ladite au moins une partition desdites données stockées,
   f) la vérification, par ladite entité d'audit, de ladite information de consignation calculée par le contrôle de si un engagement basé sur ladite information de consignation calculée correspond à un sous-ensemble de l'engagement stocké et
   g) la validation, par ledit client, de ladite information de consignation vérifiée de ladite entité d'audit par la réalisation de la même vérification selon l'étape f) sur la base de l'information de consignation vérifiée.

2. Procédé selon la revendication 1, dans lequel ledit engagement selon l'étape c) est calculé à l'aide d'un arbre de Merkle ou à l'aide d'une fonction de hachage cryptographique.

3. Procédé selon l'une des revendications 1 à 2, dans lequel ladite source publique de caractère aléatoire est dépendante du temps.

4. Procédé selon l'une des revendications 1 à 3, dans lequel ladite source publique de caractère aléatoire est basée sur la chaîne de blocs Bitcoin.

5. Procédé selon l'une des revendications 1 à 4, dans lequel une information d'identification de données est calculée sous la forme d'étiquettes de fichier, lesdites étiquettes de fichier comprenant un ou plusieurs éléments aléatoires ainsi qu'un nom de fichier aléatoire, le nombre d'éléments aléatoires correspondant à une partition des données devant être stockées.

6. Procédé selon la revendication 5, dans lequel ladite étiquette de fichier est une concaténation desdits un ou plusieurs éléments aléatoires et dudit nom de fichier aléatoire.

7. Procédé selon la revendication 2, dans lequel ladite fonction de hachage cryptographique est une fonction de hachage BLS.

8. Procédé selon l'une des revendications 1 à 7, dans lequel une fonction pseudo-aléatoire et/ou une fonction de permutation pseudo-aléatoire est utilisée pendant ladite preuve de capacité de récupération pour générer des coefficients et des indices répartis de manière aléatoire pour des partitions desdites données codées devant être prouvées comme étant récupérables.

9. Système pour la fourniture d'une preuve de capacité de récupération, « POR », pour des données à un client, comprenant une entité de stockage pour le stockage desdites données dudit client, et une entité d'audit,

   ledit client étant adapté

pour coder des données devant être stockées sur ladite entité de stockage, lesdites données codées comprenant au moins une partition,

pour échanger des accréditations avec ladite entité de stockage et ladite entité d'audit,

pour calculer un engagement, ledit engagement étant basé sur au moins un élément aléatoire, un indice de ladite au moins une partition et ladite au moins une partition desdites données codées,

pour initialiser le stockage desdites données codées sur ladite entité de stockage conjointement avec ledit engagement et

pour valider une information de consignation vérifiée par la réalisation de la même vérification de l'entité d'audit sur la base de l'information de consignation vérifiée,

ladite entité de stockage étant adaptée

pour échanger des accréditations avec ledit client et ladite entité d'audit, pour stocker lesdites données codées conjointement avec ledit engagement,

pour réaliser une POR publique avec ladite entité d'audit,

ladite entité d'audit étant adaptée

pour échanger des accréditations avec ladite entité de stockage et ledit client,

pour calculer une information de consignation pour lesdites données stockées par la réalisation d'une POR publique avec ladite entité de stockage, ladite POR publique comprenant un échantillonnage aléatoire d'au moins une partition des données stockées, dans lequel, pour le caractère aléatoire d'échantillonnage pour ladite POR, une source publique de caractère aléatoire imprévisible est utilisée et dans lequel ladite information de consignation étant calculée sur la base de l'engagement stocké et de ladite au moins une partition desdites données stockées,

pour vérifier ladite information de consignation calculée par le contrôle de si un engagement basé sur ladite information de consignation calculée correspond à un sous-ensemble de l'engagement stocké.

**10.** Support non transitoire lisible par ordinateur stockant un programme amenant un ordinateur à exécuter un procédé pour la fourniture d'une preuve de capacité de récupération, « POR », à un client, pour des données stockées sur une entité de stockage, comprenant les étapes suivantes

a) le codage, par ledit client, de données devant être stockées sur ladite entité de stockage, lesdites données codées comprenant au moins une partition

b) l'échange d'accréditations entre ladite entité de stockage, ledit client et une entité d'audit,

c) le calcul, par ledit client, d'un engagement, ledit engagement étant basé sur au moins un élément aléatoire, un indice de ladite au moins une partition et ladite au moins une partition desdites données codées,

d) le stockage desdites données codées sur ladite entité de stockage conjointement avec ledit engagement,

e) le calcul, par ladite entité d'audit, d'une information de consignation pour lesdites données stockées par la réalisation d'une POR publique entre ladite entité d'audit et ladite entité de stockage, ladite POR publique comprenant un échantillonnage aléatoire d'au moins une partition des données stockées, dans lequel, pour le caractère aléatoire d'échantillonnage pour ladite POR, une source publique de caractère aléatoire imprévisible est utilisée, et dans lequel ladite information de consignation étant calculée sur la base de l'engagement stocké et de ladite au moins une partition desdites données stockées,

f) la vérification, par ladite entité d'audit, de ladite information de consignation calculée par le contrôle de si un engagement basé sur ladite information de consignation calculée correspond à un sous-ensemble de l'engagement stocké et

g) la validation, par ledit client, de ladite information de consignation vérifiée de ladite entité d'audit par la réalisation de la même vérification selon l'étape f) sur la base de l'information de consignation vérifiée.

**11.** Entité d'audit pour une utilisation avec un procédé selon l'une des revendications 1 à 8 et/ou dans un système selon la revendication 9, ladite entité d'audit étant adaptée pour calculer une information de consignation pour des données stockées sur une entité de stockage par la réalisation d'une preuve de capacité de récupération, « POR », publique avec ladite entité de stockage, dans lequel, pour le caractère aléatoire d'échantillonnage pour ladite POR, une source publique de caractère aléatoire imprévisible est utilisée, et pour vérifier ladite information de consignation calculée par le contrôle de si un engagement basé sur ladite information de consignation calculée correspond à l'engagement stocké.

**12.** Entité de client pour une utilisation avec un procédé selon l'une des revendications 1 à 8 et/ou dans un système selon la revendication 9, ladite entité de client étant adaptée pour coder des données devant être stockées sur une entité de stockage, pour calculer un engagement, ledit engagement étant basé sur au moins un élément aléatoire, un indice de ladite au moins une partition et ladite au moins une partition desdites données codées, pour initialiser le stockage desdites données codées sur ladite entité de stockage conjointement avec ledit engagement et pour valider une information de consignation vérifiée par la réalisation de la même vérification selon l'étape f) sur la base de l'information de consignation vérifiée.

**13.** Procédé pour la fourniture d'un schéma sécurisé de preuve de capacité de récupération externalisée/délégable, « OPOR », qui est transformé à partir d'un quelconque schéma sécurisé de POR vérifiable publiquement et l'utilisation, pour le caractère aléatoire d'échantillonnage pour ladite OPOR, d'une source publique de caractère aléatoire imprévisible et de procédures cryptographiques de vérification par lots pour vérifier la POR et pour vérifier une information de POR vérifiée à l'aide d'un procédé selon l'une des revendications 1 à 8.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015173434 A

**Non-patent literature cited in the description**

- **SHACHAM, H. ; WATERS, B.** Compact Proofs of Retrievability. *ASIACRYPT,* 2008, 90-107

- **FREDERIK ARMKNECHT ; JENS-MATTHIAS BOHLI ; GHASSAN KARAME ; ZONGREN LIU ; CHRISTIAN REUTER.** *Outsourced Proofs of Retrievability In Proceedings of the ACM Conference on Computer and Communications Security (ACM CCS),* 2014